(19) Europäisches Patentamt
European Patent Office
Office européen des brevets

(11) Publication number: **0 189 983 B1**

(12) # EUROPEAN PATENT SPECIFICATION

(45) Date of publication of patent specification: **03.04.91**

(51) Int. Cl.5: **B32B 5/18**, B32B 27/00, B32B 27/32, C08J 9/06, C08J 9/36, C08G 73/10

(21) Application number: **86300210.1**

(22) Date of filing: **14.01.86**

(54) **Polyimide foam, and polyimide laminate and process for the preparation of same.**

(30) Priority: **29.01.85 US 696007**
**15.07.85 US 754774**

(43) Date of publication of application:
**06.08.86 Bulletin 86/32**

(45) Publication of the grant of the patent:
**03.04.91 Bulletin 91/14**

(84) Designated Contracting States:
**CH DE FR GB IT LI NL SE**

(56) References cited:
**US-A- 4 298 705**
**US-A- 4 488 619**
**US-A- 4 539 342**

(73) Proprietor: **Imi-Tech Corporation**
**701 Fargo Avenue**
**Elk Grove Village Illinois 60007(US)**

(72) Inventor: **Lee, Raymond**
**786 Pahl Road**
**Elk Grove Village Illinois 60007(US)**
Inventor: **Ferro, Gregory A.**
**2651 North Laverne Street**
**Chicago Illinois 60639(US)**
Inventor: **Okey, David W.**
**2651 Southcrest Drive**
**Downers Grove Illinois 60516(US)**

(74) Representative: **George, Roger David et al**
**R.G.C. JENKINS & CO. 26, Caxton Street**
**London SW1H 0RJ(GB)**

**EP 0 189 983 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to polyimide foams, laminates formed from polyimide foam and methods for their preparation. Embodiments disclose laminates of closed cell polyimide foam having a flexible, hydrophobic non-porous, vapour-impermable skin on one surface thereof.

U.S. Patent No. 4,488,619 describes a multilayered polyimide foam laminate that provides a foam barrier, foam facing acoustical composite with superior flammability, smoke and toxicity resistance.

This laminate comprises a polyimide foam having bonded thereto a fire-resistant adhesive layer and a flame retardant layer adhered to the polyimide foam by said fire resistant adhesive layer.

It is known, as is described in U.S. Patent Nos. 3,966,652 and 4,315,076, that polyimides can be produced which are hydrolytically stable and which have impoved fire resistance properties, giving off essentially no smoke or toxic fumes when exposed to flame.

Foams of the type there described are useful in aircraft cabins, space vehicles, land and sea transport equipment, as well as other applications where relatively non-flammable and negligible smoke-emitting characteristics are desirable.

In the practice of the prior art as described above, such polyimide foams are prepared by reacting an alkyl diester of a tetracarboxylic acid with one or more aromatic and/or heterocyclic diamines. Typically, a tetracarboxylic dianhydride is reacted with methanol or ethanol to form the corresponding diester which is then reacted with the amine or amines to form the corresponding polyamide-acid-ester which can then be converted to a polyimide by further heating. As a general rule, a cellular structure is developed, because both water and a lower alkyl alcohol corresponding to the alcohol portion of the ester is generated in situ during the reaction. These volatile materials produce open cell polyimide foams which are flexible and resilient and have fine, homogeneous cellular structure.

While amines of the type described above represent a significant advance in the art, their properties when used in insulation in applications involving high humidity are not as great as might be desired. Specifically, foams produced in accordance with the foregoing concepts possess an open cellular structure and therefore do not have significantly high vapor-barrier qualities to facilitate their use in, for example, fire-resistant, anti-sweat submarine hull insulation.

It is known, as described by St. Clair et al. in Int. J. Adhesion and Adhesives, 249-50 (July, 1981), that adhesives can be prepared by reaction of tetracarboxylic acid dianhydride with amine-terminated butadiene acrylonitrile to produce polyimide adhesives. Because of the viscosity and molecular weight of such amine-terminated butadiene-acrylonitrile copolymers, such amines are not capable of reaction with tetracarboxylic acid dianhydrides to provide flexible, resilient closed cell foams.

As described in United States Patent No. A 4,539,342 (issued 3rd September 1985) significantly improved vapor barrier characteristics can be imparted to polyimide foams when the foams are prepared by reaction of a tetracarboxylic acid dianhydride dimethyl-ester with a combination of an aromatic diamine and an amine-terminated copolymer of butadiene and acrylonitrile. It has been found that polyimides prepared from such a reaction mixture cannot only be foamed but produce foams which can be used under conditions of high humitidy to provide vapour barrier qualities.

The present invention seeks to provide a polyimide foam and a polyimide laminate which can be used under conditions of high humidity to provide high vapour characteristics.

The present invention further seeks to provide a polyimide foam laminate having a tough, resilient, heat resistant surface which has even further improved vapour barrier characteristics.

According to one aspect of the present invention there is provided a method of preparing a polyimide foam having a flexible, non-porous skin on one surface thereof, comprising the step of heating at least one surface of a polyimide foam under conditions of heat and pressure sufficient to melt the surface of the foam and cause the cells thereof to coalesce to form a flexible, non-porous, vapour-impermeable skin, the polyimide foam being prepared from (a) an organic tetracarboxylic acid or its anhydride or ester derivative, (b) an aromatic diamine having the formula:

$H_2N - R_2 - NH_2$

wherein $R_2$ is an aromatic group containing 5 to 16 carbon atoms, and (c) an organic liquid diamine containing at least 50% by weight of a conjugated diene, said skin produced by heating at least one surface of the foam to coalesce the polyimide on the surface to form the flexible, non-porous, vapour-impermeable skin on the surface.

In a preferred embodiment the organic liquid diamine is selected from the group consisting of a polymer having the formula:

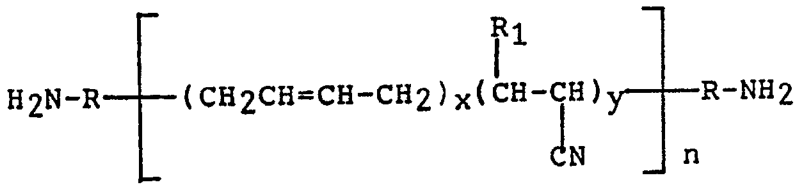

wherein R is either a phenylene group or an alkylene group, $R_1$ is hydrogen or methyl, x and y are each independently integers ranging from 1 to 25 and n is an integer, preferably below 20.

Advantageously, the foam is prepared in the presence of a solid blowing agent.

In an embodiment, the aromatic diamine is diaminopyridine.

According to yet another aspect of the invention there is provided a polyimide foam article having a flexible, hydrophobic, non-porous, vapour-impermeable skin on one surface thereof comprising a polyimide foam prepared by foaming a prepolymer prepared from (a) an organic tetracarboxylic acid or its anhydride or ester derivative, (b) an aromatic diamine having the formula:

$H_2N-R_2-NH_2$

wherein $R_2$ is an aromatic group containing 5 to 16 carbon atoms, and (c) an organic liquid diamine containing at least 50% by weight of a conjugated diene, said skin produced by heating at least one surface of the foam to coalesce the polyimide on the surface to form the flexible, non-porous, vapour-impermeable skin on the surface.

According to a preferred aspect of the present invention there is provided a laminate comprising a polyimide foam having bonded thereto a fire-resistant adhesive layer and a flame retardant layer adhered to the polyimide foam by said fire resistant adhesive layer, characterised in that

(a) the polyimide foam is prepared by forming a prepolymer formed from (1) an organic tetracarboxylic acid or anhydride or ester derivative, (2) an aromatic diamine having the formula:

$H_2N-R_2-NH_2$

wherein $R_2$ is an aromatic group containing 5 to 16 carbon atoms, and (3) an organic liquid diamine containing at least 50% by weight of a conjugated diene, said foam having a vapour-impermable skin on one surface thereof formed by heating one surface of the foam to coalesce the polyimide on the surface;

(b) wherein said fire-resistant adhesive layer is heat activated and overlays the skin; and

(c) said flame retardant layer comprises a polyimide film adhered to said skin by said adhesive.

In an embodiment the adhesive is a fluorocarbon film.

In an embodiment the polyimide film is formed from pyromellitic dianhydride or a diester thereof and an aromatic diamine.

In an embodiment the aromatic diamine of said film is oxydianiline.

In an embodiment the adhesive is a fluorinated ethylene-propylene copolymer.

In an embodiment the organic diamine is an amine-terminated polymer of at least 50% by weight of a conjugated diene alone or copolymerized with at least one vinyl monomer copolymerizable therewith which is end blocked with an aliphatic or aromatic amine.

In an embodiment the vinyl monomer is selected from the group consisting of styrene, acrylonitrile, methacrylonitrile, and combinations thereof.

In an embodiment the tetracarboxylic acid is a di($C_1$ to $C_3$ alkyl) ester of benzophenone tetracarboxylic acid.

In an embodiment the tetracarboxylic acid derivative is a compound having the formula:

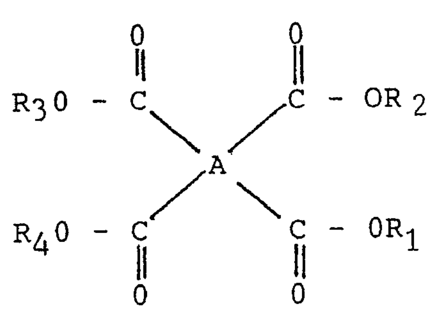

wherein A is a tetravalent organic group and $R_1$ to $R_4$ are each selected from the group consisting of hydrogen and $C_1$ to $C_3$ alkyl.

In an embodiment the said aromatic diamine of said foam is methylene dianiline.

An embodiment includes at least one aromatic and at least one heterocyclic diamine.

Another embodiment includes at least one aliphatic diamine.

In an embodiment the surface of the foam is contacted with a heated surface under conditions of heat and pressure sufficient to coalesce the cells of the foam to form the flexible, non-porous, vapour-impermeable skin.

Preferably the surface is heated to a temperature within the range of 225 to 320 ° C.

According to another aspect of the invention there is provided a method of preparing a laminate having a flexible, non-porous surface comprising the steps of heating at least one surface of a polyimide foam in contact with a fire-resistant, heat-activated adhesive layer and a polyimide film in contact with the adhesive layer under conditions of heat and pressure sufficient to melt the surface of the foam and cause the cells thereof to coalesce to form a flexible, non-pourous, vapour-impermeable skin to which the polyimide is bonded by means of adhesive, said polyimide foam being prepared from a prepolymer formed from (1) an organic tetracarboxylic acid or anhydride or ester derivative, (2) an aromatic diamine having the formula:

$H_2N - R_2 - NH_2$

wherein R2 is an aromatic group containing 5 to 16 carbon atoms, and (3) an organic liquid diamine containing at least 50% by weight of a conjugated diene, said foam having a vapour-impermeable skin on one surface thereof formed by heating one surface of the foam to coalesce the polyimide on the surface.

It is a preferred feature that the surface of the foam is heated to a temperature within the range of 225 to 320 ° C for at least 0.75 minutes.

It is a preferred feature that the organic diamine is an amine-terminated polymer of at least 50%by weight of a conjugated diene alone or copolymerized with at least one vinyl monomer copolymerizable therewith which is end blocked with a aliphatic or aromatic amine.

In a preferred embodiment the foam is prepared in the presence of a solid blowing agent.

It has been found that the laminate of the present invention provides greater flexibility in the foam and added puncture resistance. In addition, the laminate has further improved vapour barrier characteristics.

In an embodiment the polyimide foam is one prepared by reaction of an organic tetracarboxylic acid or its anhydride or ester derivative with an aromatic diamine and an organic diamine which is an amine-terminated polymer of at least 50% by weight of a conjugated diene, either alone or copolymerized with at least one vinyl monomer copolymerized therewith. Such copolymers can be end blocked with an aliphatic or aromatic unsaturated amine to provide the desired amine termination. A number of vinyl monomers copolymerizable with a conjugated diene may be used including styrene as well as substituted styrenes, such as alphamethylstyrene and various other substitute styrenes. In addition, use can also be made of acrylonitrile, methacrylonitrile and combinations thereof. As the conjugated diene, use can be made of butadiene as well as other well-known conjugated dienes such as chloroprene, isoprene.

The copolymer of the conjugated diene and the vinyl monomer, when the amine-terminated copolymer contains a vinyl monomer, is preferably one formed by free radical polymerization. Typically, the conjugated diene polymer or copolymer has a low molecular weight, preferably less than about 3000 to insure that it is sufficiently fluid to react in the formation of the polyimide as well as sufficiently fluid so as to be capable of foaming. The resulting polymer or copolymer can then be end-capped with either aromatic or aliphatic unsaturated amines in accordance with conventional techniques.

In the preferred practice of the invention, the amine-terminated butadiene-nitrile copolymer has the general formula:

$$H_2N-R-\left[(CH_2CH=CH-CH_2)_x\ \ (\overset{R_1}{\overset{|}{C}}H-\underset{CN}{\underset{|}{C}}H)_y\right]_n-R-NH_2$$

wherein R is either a phenylene group or an alkylene group, $R_1$ is hydrogen or methyl, and x and y are each independently integers ranging from 1 to 25 and n is an integer, preferably below 20.

In this preferred embodiment of the invention, the amine-terminated butadiene-nitrile copolymer is a butadiene-nitrile rubber wherein butadiene constitutes at least 50 percent by weight of the total of the butadiene and nitrile. The nitrile monomer copolymerized with the butadiene can either be acrylonitrile or methacrylonitrile and the polymerization reaction can be carried out in accordance with conventional free radical polymerization techniques. The copolymer produced is a random copolymer containing both butadiene and acrylonitrile or methacrylonitrile in the polymer backbone. The amine functionality is introduced by end-capping of the copolymer with, for example, paraaminostyrene or allylamine in accordance with conventional conventional techniques.

In the preferred practice of she invention, the organic tetracarboxylic acid in the form of its diester from methanol or ethanol is reacted with one of the foregoing diamines, either alone or in combination with other amines to form a polyamide-acid/ester prepolymer which can be foamed and cured, either alone or in the presence of a blowing agent, to provide the desired polyimide foam.

The tetracarboxylic acids or derivatives thereof preferably employed in the practice of the invention are those having the general formula:

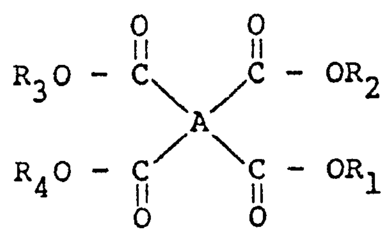

wherein A is a tetravalent organic group and $R_1$ to $R_4$, inclusive, are each selected from the group consisting of hydrogen and methyl, ethyl or propyl. The tetravalent organic group A is preferably one having one of the following structures:

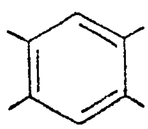

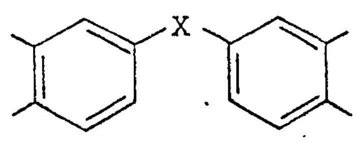

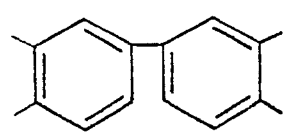

wherein x is one or more of the following:

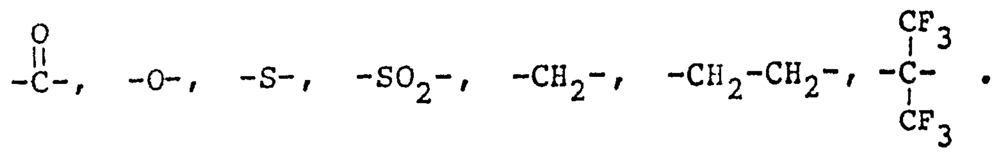

Preferred among the tetracarboxylic acid and derivatives thereof is 3,3',4,4'-benzophenone tetracarboxylic acid and its corresponding $C_1$ - $C_3$ alkyl (preferably $C_1$ - $C_3$ dialkyl) esters.

As the organic diamine, use is preferably made of one or more aromatic and/or heterocyclic diamines which are themselves known to the art. Such aromatic diamines can be represented by the structure:
$H_2N\text{-}R_2\text{-}NH_2$
wherein $R_2$ is an aromatic diamine group containing 5 to l6 carbon atoms and containing up to one hetero atom in the ring, the hetero atom being selected from the group consisting of -N-, -O- and -S-. Also included herein are those $R_2$ groups wherein $R_2$ is a diphenyl group or a diphenylmethane group. Representative of such diamines are:

2,6-diaminopyridine
3,5-diaminopyridine
3,3'-diaminodiphenyl sulfone
4,4'-diaminodiphenyl sulfone
4,4'-diaminodiphenyl sulfide
3,3'-diaminodiphenyl ether
4,4'-diaminodiphenyl ether
meta-phenylene diamine
para-phenylene diamine
p,p'-methylene dianiline
2,6-diamino toluene

2,4-diamino toluene

It is also possible, and sometimes desirable in the preparation of the polyamide-acid/ester prepolymer, to include in the reaction mixture one or more aliphatic diamines. Such aliphatic diamines are preferably alpha-omega diaminoalkanes having the general formula:

$HN_2 - (CH_2)_a - NH_2$

wherein a is an integer from 2 to 16. Representative of such diamines include 1,3-diaminopropane, 1,4-diamino-butane, 1,5-diaminopentane, 1,6-diaminohexane, etc.

In place of the foregoing aliphatic amines, use can also be made of the polyamines marketed by Texaco Chemical Company under the trademark JEFFAMINE. Those amines can be described as polyoxypropylene amines, and have the formula:

$NH_2CH(CH_3)CH_2\{OCH_2CH(CH_3)\}_xNH_2$

wherein x varies from 1 to about 5.

In accordance with one preferred embodiment of the invention, the polyamide-acid/ester prepolymer is formed by reaction of a dialkyl ester of the organic tetracarboxylic acid with the amines described above. The relative proportions used in the preparation of the prepolymer can be varied to relatively wide limits to provide good foams. In general, it is preferred to employ between 0.5 to 1.5 total moles of amine per mole of the tetra- carboxylic acid dianhydride or ester derivative thereof. The aromatic amine generally constitutes from 92.5 to 99.9999 mole % based on the number of moles of the tetracarboxylic acid or derivative, while the proportion of the amine-terminated diene polymer constitutes 0.0001 to 7.5 mole % based on the total moles of tetracarboxylic acid or derivative thereof.

It is also possible, and sometimes preferred, to employ a combination of aromatic amines, as described above, which is carbocyclic with an N-heterocyclic amine of the sort described above in addition to the amine-terminated butadiene-nitrile copolymer.

It is also possible to employ, as a fourth amine component, the aliphatic amine described above. When the aliphatic amine is employed, it is generally used in an amount ranging from 1 to 40 percent based on the total moles of the acid anhydride or ester employed.

In the preparation of the prepolymer, the tetracarboxylic acid dianhydride derivative, usually in the form of the diester, is reacted with the diamine o diamines at a temperature at or below the reflux temperature of the reaction mixture. Without limiting the invention as to theory, it is believed that the prepolymer is formed of a low-molecular weight polyamide-acid/ester which can then be heated to complete the polymerization reaction. The prepolymer can thus be in the form of a liquid or a solid having a low molecular weight, so long as it is capable of being converted by further reaction to a high-molecular weight polyimide polymer.

When using a lower alkyl ester of the tetracarboxylic acid, the resulting alcohol produced in the reaction as well as the water released during the reaction can be used as the blowing agent during polymerization to form the desired polyimide foams. Alternatively, use can be made of any of a variety of blowing agents, such as the solid blowing agents described in European Patent A 110723.

As there described, the homogeneity of the cellular structure of the resulting polyimide foam can be more accurately controlled by controlling the particle size of the solid blowing agent, when such a blowing agent is employed. It has been found that the particle size of the solid blowing agent is preferably less than 0.02 cm in diameter, with 98% of the blowing agent particle sizes being less than 0.015 cm in diameter.

In the practice of the invention, it is possible to include in the reaction mixture various filler and/or reinforcing materials. For example, graphite, glass and other synthetic fibers can be added to the composition to produce a fiber-reinforced product. It is frequently desirable to employ a surfactant, thereby increasing bubble stability and the uniformity of the cellular structure, to increase the fatigue resistance of the foam and to make the foam more flexible and resilient. Such surfactants are themselves conventional, and form no part of the present invention.

The temperatures at which the prepolymer is converted to the polyimide polymer are generally those temperatures used in the preparation of other polyimide polymers. As a general rule, temperatures ranging from 200 to 400 °C can be used, with heating times ranging from 5 to 60 minutes or longer. As those skilled in the art will appreciate, the time for carrying out the reaction is somewhat dependent on the reaction temperature, higher temperatures enabling the use of shorter reaction times. It is also possible to heat to a lower temperature in the first stage of the reaction and than higher temperatures in the later stages.

Heating can be carried out in a conventional oven if desired. Alternatively, the foaming and curing of the prepolymer into a polyimide polymer can be effected by means of microwave heating. It has been found that the prepolymer can be converted to the corresponding polyimide foam by exposing the prepolymer for 1 to 120 minutes to radio frequencies within the range 915 to 2450 MHz, with the power output ranging from 1 to 100 kW. The power output to prepolymer weight ratio generally reads from 0.1 to 100 kW per kg).

Once the foam has been produced, the laminate is formed by coating at least one surface of the foam

with the adhesive and laying down the polyimide film on top of the adhesive layer. Thereafter, heating is applied to the polyimide film under conditions of temperature and pressure sufficient to melt the surface of the foam and cause the cells thereof to coalesce and thereby form a skin on the surface. At the same time, the heat-activated adhesive is also activated under conditions of temperature to cause the polyimide film to be securely formed on the surface of the foam.

In the preferred practice of the invention, the foam is contacted with a heated surface at a pressure sufficient to cause the cells of the foam to coalesce and for a time sufficient to cause complete melting and solidification of the polyimide foam thus melted into the skin. At the same time, the temperature is sufficient to activate the heat-activated adhesive to insure that the polyimide foam is bonded to the skin simultaneously formed.

In the preferred practice of the invention, the surface of the foam is heated to a temperature within the range of 200 to 350°C, and preferably 260 to 290°C. To effect the heating of the foam and thus cause coalescence of the cells, use is preferably made of a heated platen fabricated of either a metal or metal-coated with a non-stick tetrafluoroethylene material such as Teflon, marketed by DuPont. Also suitable for use in the invention are Teflon-coated glass cloths which are heated to the desired temperature and contacted with foam.

It is generally sufficient that the foam be contacted with the heated surface for a period of at least 0.75 minutes, and generally within the range of 1 to 5 minutes, with 3 to 4 minutes being preferred, depending in part on the thickness of the skin desired. As will be appreciated by those skilled in the art, both shorter and longer contact times can be employed. In general, a slight positive pressure of the heated surface on the surface of the foam is desirable to accelerate the melting and coalescence of the foam. In general, pressures of 1.746 to 34.475 KPa (0.25 to 5 psi) can be used for that purpose.

As described above, the polyimide film adhered to the skin on the foam is one film having good toughness. The preferred polyimide film employed in the practice of this invention is a polyimide film prepared by reaction of an organic tetracarboxylic acid or anhydride or ester derivative of the type described above and one of the aromatic diamines described above. For optimum results, use is preferably made of a polyimide made of a polyimide film formed substantially from pyromellitic dianhydride or its corresponding ester with oxydianiline. That polyimide is commercially available from Dupont under the trademark "KAPTON". It has been found that the polyimide film, adhered to the skin of the polyimide foam by a fire-resistant, heat-activated adhesive provides excellent vapor barrier characteristics, good fire resistance and improved toughness.

The adhesive is, as indicated, a fire-resistant, heat-activated adhesive, such adhesives themselves being known to those skilled in the art. One adhesive that has been found to provide particularly good results are the fluorocarbon films manufactured by Dupont, usually in the form of a fluorinated ethylene-propylene copolymer. Such an adhesive is commercially available from Dupont, and has been found to be particularly well suited for use in the practice of the present invention.

The thickness of the polyimide film adhered to the skin of the foam is not critical and can be varied within relatively broad ranges. Good results are usually obtained when the polyimide film ranges from 0.0000254 to 0.254 cm (0.00001 to 0.1 inches). The thickness of the adhesive can likewise be varied within relatively wide ranges, best results usually being obtained with an adhesive film thickness of 0.00000254 to 0.254 cm (0.000001 to 0.01 inches).

Having described the basic concepts of the invention, reference is now made to the following examples which are provided by way of illustration, but not by way of limitation, of the practice of the invention.

Example 1

This example illustrates the practice of the present invention in the use of the amine-terminated butadiene-acrylonitrile copolymer.

To 322.23 g (1 mole) of benzophenontetracarboxylic acid dianhydride (BTDA) add 240 ml of methanol ($CH_3OH$) and 24 ml of $H_2O$. The reactants are slurried and then heated to reflux, 67-72°C, to form the methyl ester of benzophenonetetracarboxylic acid. After esterification is complete, 0.654g of the the amine-terminated butadiene-acrylonitrile copolymer is added to the refluxing solution and mixed under reflux conditions, for 30 to 180 minutes. The remaining diamines (2,6-diaminopyridine (32.70g) and p,p'-methylenedianiline (138.45g)) are then added individually and allowed to mix for 15 minutes before the addition of the next diamine while maintaining the batch temperature above 50°C.

Following the addition of the last diamine, the reaction mixture is heated to between 65-70°C for 5 to 200 minutes. After the reaction is complete, the mixture is cooled to 60°C, and 11.53g of a surfactant is

added. Conversion to powder is accomplished by drying for 90 to 120 minutes at 65° C, then at 65° C and 170.65 mbar (128 mm Hg) pressure from 45 to 75 minutes, then at 65° C and 36.66 mbar (26 mm Hg) pressure from 45 to 75 minutes. The resulting friable-material is then pulverised and passed through a 0.06cm (600 micron) sieve.

Foams are prepared by exposure to microwave energy 1.4 to 100 KW for 6 to 200 minutes and then cured for 30 to 200 minutes at 232-300° C.

An electrically-heated platen press is heated to between 271 to 316 C (520 to 600 F), only the bottom platen being heated. The heated platen is then covered with a sheet of Teflon-coated glass fabric or Teflon coating to prevent sticking. A piece of polyimide film in the form of KAPTON polyimide film having a thickness of 0.00254 cm (0.001 inches) having a coating on one surface with a thickness of 0.00127 cm (0.0005 inches) of heat-activated adhesive, Teflon FEP 54A fluorocabon is laid on top of the Teflon-coated glass sheet with the adhesive layer facing upwardly. A 3.175 cm (1.25-inch) thick sheet of the closed cell polyimide foam described above is placed on top of the film and the press is closed to a gap of 2.54cm (1.0 inch). The press is held in the closed position for 30 to 120 seconds for the adhesive to melt and flow and to form a skin on the polyimide film.

The pressure is released and it is found that the polyimide film is securely adhered to the skin, resulting in a flexible composite which is resistant to abrasion, puncture, fire and the passage of water vapor.

## Example 2

This example illustrates the relative vapor barrier characteristics of the various components employed in the manufacture of the laminate embodiments of the present invention relative to the laminate itself.

The various components of the laminate of this invention are tested to determine their water vapor transmission properties, with the following results:

| Article | Water Vapour Transmission Rate (Perm-cm) |
|---|---|
| Closed cell foam as prepared in Example 1 | 114.3 |
| Closed cell foam as prepared in Example 1 with a 0.0635 cm skin on one surface thereof | 63.5 |
| 0.00254 cm thick KAPTON film with 2.54 cm of | 5.08 |

| | |
|---|---|
| closed cell foam of Example 1 | |
| 0.00127 cm thick FEP adhesive film on 2.54 cm closed cell foam of Example 1 | 0.889 |
| Laminate of the invention with 0.00254 cm KAPTON film secured with 0.00127 cm FEP adhesive film on 2.54 cm closed cell foam of Example 1 with 0.0635 cm thick skin | 0.86 |

As can be seen from the foregoing table, the laminate of the present invention provides improved water vapor transmission characteristics.

## Claims

1. A laminate comprising a polyimide foam having bonded thereto a fire-resistant adhesive layer and a flame retardant layer adhered to the polyimide foam by said fire resistant adhesive layer, characterised in that
   (a) the polyimide foam is prepared by forming a prepolymer formed from (1) an organic tetracarboxylic acid or anhydride or ester derivative, (2) an aromatic diamine having the formula;
   $H_2N - R_2 - NH_2$
   wherein $R_2$ is an aromatic group containing 5 to 16 carbon atoms, and (3) an organic liquid diamine containing at least 50% by weight of a conjugated diene, said foam having a vapour-impermeable skin on one surface thereof formed by heating one surface of the foam to coalesce the polyimide on the surface;
   (b) wherein said fire resistant adhesive layer is heat activated and overlays said skin; and
   (c) said flame retardant layer comprises a polyimide film adhered to said skin by said adhesive.

2. A laminate as claimed in claim 1, wherein the adhesive is a fluorocarbon film.

3. A laminate as claimed in either claim 1 or claim 2, wherein the polyimide film is formed from pyromellitic dianhydride or a diester thereof and an aromatic diamine.

4. A laminate as claimed in claim 3, wherein the aromatic diamine of said film is oxydianiline

5. A laminate as claimed in any one of Claims 1 to 4, wherein the adhesive is a fluorinated ethylene-propylene copolymer.

6. A laminate as claimed in any one of Claims 1 to 5, wherein the organic diamine is an amine-terminated polymer of at least 50% by weight of a conjugated diene alone or copolymerized with at least one vinyl monomer copolymerizable therewith which is end blocked with an aliphatic or aromatic amine.

7. A laminate as claimed in Claim 6, wherein the vinyl monomer is selected from the group consisting of styrene, acrylonitrile, methacrylonitrile, and combinations thereof.

8. A laminate as claimed in any one of Claims 1 to 7, wherein the tetracarboxylic acid is a di($C_1$ to $C_3$ alkyl) ester of benzophenone tetracarboxylic acid.

9. A laminate as claimed in any one of Claims 1 to 7, wherein the tetracarboxylic acid derivative is a compound having the formula:

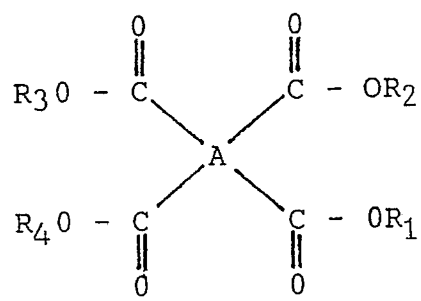

wherein A is a tetravalent organic group and $R_1$ to $R_4$ are each selected from the group consisting of hydrogen and $C_1$ to $C_3$ alkyl.

10. A laminate as claimed in any one of Claims 1 to 9, wherein the said aromatic diamine of said foam is methylene dianiline.

11. A laminate as claimed in any one of Claims 1 to 10, which includes at least one aromatic and at least one heterocyclic diamine.

12. A laminate as claimed in any one of Claims 1 to 10, which includes at least one aliphatic diamine.

13. A laminate as claimed in any one of Claims 1 to 12, wherein the surface of the foam is contacted with a heated surface under conditions of heat and pressure sufficient to coalesce the cells of the foam to form the flexible, non-porous, vapour-impermeable skin.

14. A laminate as claimed in any one of Claims 1 to 13, wherein the surface is heated to a temperature within the range of 225 to 320 ° C.

15. A method of preparing a laminate having a flexible, non-porous surface comprising the steps of heating at least one surface of a polyimide foam in contact with a fire-resistant, heat-activated adhesive layer and a polyimide film in contact with the adhesive layer under conditions of heat and pressure sufficient to melt the surface of the foam and cause the cells thereof to coalesce to form a flexible, non-pourous, vapour-impermeable skin to which the polyimide is bonded by means of adhesive, said polyimide foam being prepared from a prepolymer formed from (1) an organic tetracarboxylic acid or anhydride or ester derivative, (2) an aromatic diamine having the formula:

$H_2N - R_2 - NH_2$

wherein R2 is an aromatic group containing 5 to 16 carbon atoms, and (3) an organic liquid diamine containing at least 50% by weight of a conjugated-diene, said foam having a vapour-impermeable skin on one surface thereof formed by heating one surface of the foam to coalesce the polyimide on the surface.

16. A method as claimed in Claim 15 wherein the surface of the foam is heated to a temperature within the range of 225 to 320 ° C for at least 0.75 minutes.

**17.** A method as claimed in either Claim 15 or Claim 16, wherein the organic diamine is an amine-terminated polymer of at least 50%by weight of a conjugated diene alone or copolymerized with at least one vinyl monomer copolymerizable therewith which is end blocked with a aliphatic or aromatic amine.

**18.** A method as claimed in any one of Claims 15 to 17, wherein the foam is prepared in the presence of a solid blowing agent.

**19.** A polyimide foam article having a flexible, hydrophobic, non-porous, vapour-impermeable skin on one surface thereof comprising a polyimide foam prepared by foaming a prepolymer prepared from (a) an organic tetracarboxylic acid or its anhydride or ester derivative, (b) an aromatic diamine having the formula:

$H_2N\text{-}R_2\text{-}NH_2$

wherein $R_2$ is an aromatic group containing 5 to 16 carbon atoms, and(c) an organic liquid diamine containing at least 50% by weight of a conjugated diene, said skin produced by heating at least one surface of the foam to coalesce the polyimide on the surface to form the flexible, non-porous, vapour-impermeable skin on the surface.

**20.** A method of preparing a polyimide foam having a flexible, non-porous skin on one surface thereof, comprising the step of heating at least one surface of a polyimide foam under conditions of heat and pressure sufficient to melt the surface of the foam and cause the cells thereof to coalesce to form a flexible, non-porous, vapour-impermeable skin, the polyimide foam being prepared from (a) an organic tetracarboxylic acid or its anhydride or ester derivative, (b) an aromatic diamine having the formula:

$H_2N$ - R2 - $NH_2$

wherein $R_2$ is an aromatic group containing 5 to 16 carbon atoms, and (c) an organic liquid diamine containing at least 50% by weight of a conjugated diene, said skin produced by heating at least one surface of the foam to coalesce the polyimide on the surface to form .the flexible, non-porous, vapour-impermeable skin on the surface.

**21.** A method according to Claim 20, wherein the organic liquid diamine is selected from the group consisting of a polymer having the formula:

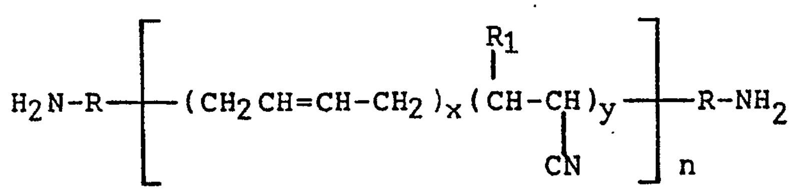

wherein R is either a phenylene group or an alkylene group, $R_1$ is hydrogen or methyl, x and y are each independently integers ranging from 1 to 25 and n is an integer, preferably below 20.

**22.** A method according to either of Claims 20 or 21, wherein the foam is prepared in the presence of a solid blowing agent.

**23.** A method according to any one of Claims 20 to 22, wherein the aromatic diamine is diaminopyridine.

### Revendications

**1.** Stratifié comprenant une mousse de polyimide à laquelle est liée une couche d'adhésif ignifuge et une couche retardatrice de flamme adhérant à la mousse de polyimide par ladite couche d'adhésif ignifuge, caractérisé par le fait que :

(a) la mousse de polyimide est préparée par formation d'un prépolymère formé à partir de :

(1) un acide organique tétracarboxylique ou un dérivé constitué par un anhydride ou un ester dudit acide ;

(2) une diamine aromatique ayant la formule :

$H_2N$ - $R_2$ - $NH_2$

dans laquelle $R_2$ est un groupe aromatique contenant de 5 à 16 atomes de carbone ; et
(3) une diamine liquide organique contenant au moins 50% en poids d'un diène conjugué, ladite mousse ayant une peau imperméable à la vapeur sur l'une de ses surfaces, formée par chauffage de l'une des surfaces de la mousse pour provoquer la coalescence du polyimide sur la surface ;
(b) ladite couche d'adhésif ignifuge est activée par la chaleur et recouvre ladite peau ;
(c) ladite couche retardatrice de flamme comprend un film de polyimide adhérant à ladite peau par ledit adhésif.

**2.** Stratifié selon la revendication 1, dans lequel l'adhésif est un film fluorocarboné.

**3.** Stratifié selon la revendication 1 ou 2, dans lequel le film de polyimide est formé à partir du dianhydride pyromellitique ou d'un diester de celui-ci et d'une diamine aromatique.

**4.** Stratifié selon la revendication 3, dans lequel la diamine aromatique dudit film est l'oxydianiline.

**5.** Stratifié selon l'une des revendications 1 à 4, dans lequel l'adhésif est un copolymère éthylène-propylène fluoré.

**6.** Stratifié selon l'une des revendications 1 à 5, dans lequel la diamine organique est un polymère à terminaisons amine d'au moins 50% en poids d'un diène conjugué seul ou copolymérisé avec au moins un monomère vinylique copolymérisable avec lui, qui est bloqué aux extrémités par une amine aliphatique ou aromatique.

**7.** Stratifié selon la revendication 6, dans lequel le monomère vinylique est choisi dans le groupe constitué par le styrène, l'acrylonitrile, le méthacrylonitrile, et leurs combinaisons.

**8.** Stratifié selon l'une des revendications 1 à 7, dans lequel l'acide tétracarboxylique est un ester de di-(alkyle en $C_1$ à $C_3$) de l'acide benzophénone tétracarboxylique.

**9.** Stratifié selon l'une des revendications 1 à 7, dans lequel le dérivé d'acide tétracarboxylique est un composé ayant la formule :

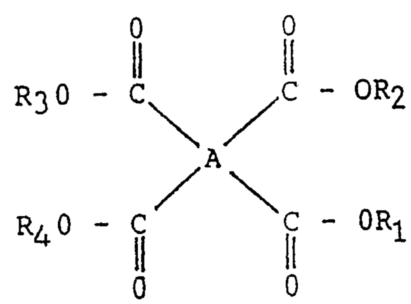

dans laquelle :
- A est un groupe organique tétravalent ; et
- $R_1$ à $R_4$ sont choisis chacun dans le groupe constitué par hydrogène et alkyle en $C_1$ à $C_3$.

**10.** Stratifié selon l'une des revendications 1 à 9, dans lequel ladite diamine aromatique de ladite mousse est la méthylène dianiline.

**11.** Stratifié selon l'une des revendications 1 à 10, qui comprend au moins une diamine aromatique et au moins une diamine hétérocyclique.

**12.** Stratifié selon l'une des revendications 1 à 10, qui comprend au moins une diamine aliphatique.

**13.** Stratifié selon l'une des revendications 1 à 12, dans lequel la surface de la mousse est mise en contact avec une surface chauffée dans des conditions de chaleur et de pression suffisantes pour provoquer la

coalescence des cellules de la mousse, afin de former la peau imperméable à la vapeur, non-poreuse, flexible.

**14.** Stratifié selon l'une des revendications 1 à 13, dans lequel la surface est chauffée à une température se situant dans la plage de 225 à 320 °C.

**15.** Procédé de fabrication d'un stratifié ayant une surface non-poreuse, flexible, comprenant les étapes de chauffage d'au moins une surface d'une mousse de polyimide en contact avec une couche d'adhésif, activée par la chaleur, ignifuge, et un film de polyimide en contact avec la couche d'adhésif dans des conditions de chaleur et de pression suffisantes pour faire fondre la surface de la mousse et pour provoquer la coalescence des cellules de cette dernière, afin de former une peau imperméable à la vapeur, non-poreuse, flexible, à laquelle le polyimide est lié au moyen de l'adhésif, ladite mousse de polyimide étant préparée à partir d'un prépolymère formé à partir de :

(1) un acide organique tétracarboxylique ou un dérivé constitué par un anhydride ou un ester dudit acide,

(2) une diamine aromatique ayant la formule :

$H_2N - R_2 - NH_2$

dans laquelle $R_2$ est un groupe aromatique contenant 5 à 16 atomes de carbone ; et

(3) une diamine liquide organique contenant au moins 50% en poids d'un diène conjugué, ladite mousse ayant une peau imperméable à la vapeur sur l'une de ses surfaces, formée par chauffage d'une surface de la mousse pour provoquer la coalescence du polyimide sur la surface.

**16.** Procède selon la revendication 15, dans lequel la surface de la mousse est chauffée à une température se situant dans la plage de 225 à 320 °C pendant au moins 0,75 minute.

**17.** Procédé selon la revendication 15 ou 16, dans lequel la diamine organique est un polymère à terminaisons amine d'au moins 50% en poids d'un diène conjugué seul ou copolymérisé avec au moins un monomère vinylique polymérisable avec lui, qui est bloqué à ses extrémités par une amine aliphatique ou aromatique.

**18.** Procédé selon l'une des revendications 15 à 17, dans lequel la mousse est préparée en présence d'un agent d'expansion solide.

**19.** Article en mousse de polyimide ayant une peau imperméable à la vapeur, non-poreuse, hydrophobe, flexible, sur l'une de ses surfaces, comprenant une mousse de polyimide préparée par moussage d'un prépolymère préparé à partir de :

(a) un acide organique tétracarboxylique ou un dérivé constitué par un anhydride ou un ester dudit acide ;

(b) une diamine aromatique ayant la formule :

$H_2N-R_2-NH_2$

dans laquelle $R_2$ est un groupe aromatique contenant 5 à 16 atomes de carbone ; et

(c) une diamine liquide organique contenant au moins 50% en poids d'un diène conjugué, ladite peau étant obtenue par chauffage d'au moins une surface de la mousse pour provoquer la coalescence du polyimide sur la surface, afin de former la peau imperméable à la vapeur, non-poreuse, flexible, sur la surface.

**20.** Procédé de fabrication d'une mousse de polyimide ayant une peau non-poreuse, flexible, sur l'une de ses surfaces, comprenant l'étape de chauffage d'au moins une surface d'une mousse de polyimide dans des conditions de chaleur et de pression suffisantes pour faire fondre la surface de la mousse et provoquer la coalescence des cellules de celle-ci afin de former une peau imperméable à la vapeur, non-poreuse, flexible, la mousse de polyimide étant préparée à partir de :

(a) un acide organique tétracarboxylique ou un dérivé constitué par un anhydride ou un ester dudit acide ;

(b) une diamine aromatique ayant la formule :

$H_2N - R_2 - NH_2$

dans laquelle $R_2$ est un groupe aromatique contenant 5 à 16 atomes de carbone ; et

(c) une diamine liquide organique contenant au moins 50%

en poids d'un diène conjugué, ladite peau étant obtenue par chauffage d'au moins une surface de la

mousse pour provoquer la coalescence du polyimide sur la surface, afin de former la peau imperméable à la vapeur, non-poreuse, flexible, sur la surface.

**21.** Procédé selon la revendication 20, dans lequel la diamine liquide organique est choisie dans le groupe consistant en un polymère ayant la formule :

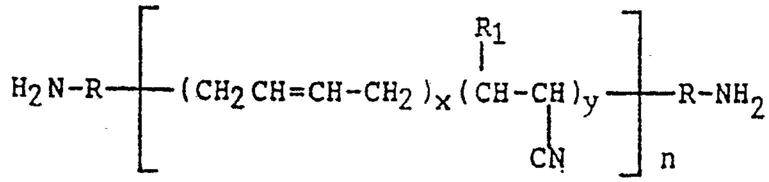

dans laquelle :

- R représente soit un groupe phénylène, soit un groupe alkylène ;
- $R_1$ représente hydrogène ou méthyle ;
- x et y représentent chacun indépendamment des entiers allant de 1 à 25 ; et
- n est un entier, de préférence inférieur à 20.

**22.** Procédé selon l'une des revendications 20 ou 21, dans lequel la mousse est préparée en présence d'un agent d'expansion solide.

**23.** Procédé selon l'une des revendications 20 à 22, dans lequel la diamine aromatique est la diaminopyridine.

**Ansprüche**

**1.** Laminat aus einem Polyimidschaum mit einer damit verbundenen feuerbeständigen Klebeschicht und einer feuerhemmenden Schicht, die durch die feuerbeständige Klebeschicht fest mit dem Polyimidschaum verbunden ist, dadurch gekennzeichnet, daß

(a) der Polyimidschaum durch die Bildung eines Prepolymers aus (1) einer organischen Tetracarbonsäure oder -anhydrid oder Esterderivat, (2) einem aromatischen Diamin der Formel:
$H_2N - R_2 - NH_2$,
worin $R_2$ für eine aromatische Gruppe mit 5 bis 16 Kohlenstoffatomen steht, und (3) einem organischen flüssigen Diamin, das mindestens 50 Gew.% eines konjugierten Diens enthält, hergestellt wird, wobei der Schaum auf seiner einen Oberfläche eine dampfundurchlässige Haut aufweist, die durch Erhitzen einer Oberfläche des Schaums zum Koaleszieren des Polyimids an der Oberfläche gebildet wird;

(b) wobei die feuerbeständige Klebeschicht durch Wärme aktiviert wird und die Haut überzieht; und

(c) die feuerhemmende Schicht einen Polyimidfilm umfaßt, der durch die Klebeschicht fest mit der Haut verbunden ist.

**2.** Laminat nach Anspruch 1, worin das Klebemittel ein Fluorkohlenstoff-Film ist.

**3.** Laminat nach Anspruch 1 oder 2, worin der Polyimidfilm aus Pyromellithsäuredianhydrid oder einem Diester daraus und einem aromatischen Diamin gebildet wird.

**4.** Laminat nach Anspruch 3, worin das aromatische Diamin des Films Oxydianilin ist.

**5.** Laminat nach einem der Ansprüche 1 bis 4, worin das Klebemittel ein fluoriertes Äthylen-Propylen-Copolymer ist.

**6.** Laminat nach einem der Ansprüche 1 bis 5, worin das organische Diamin ein Polymer mit endständigem Amin ist, das zu mindestens 50 Gew.% aus lediglich einem konjugierten Dien besteht oder mit mindestens einem damit copolymerisierbaren Vinylmonomer, das mit einem aliphatischen oder aromatischen Amin am Ende blockiert ist, copolymerisiert ist.

7. Laminat nach Anspruch 6, worin das Vinylmonomer aus der Gruppe Styrol, Acrylonitril, Methacrylonitril und Kombinationen davon ausgewählt wird.

8. Laminat nach einem der Ansprüche 1 bis 7, worin die Tetracarbonsäure ein Di-($C_1$ bis $C_3$)alkylester der Benzophenon-tetracarbonsäure ist.

9. Laminat nach einem der Ansprüche 1 bis 7, worin das Tetracarbonsäure-Derivat eine Verbindung der Formel ist:

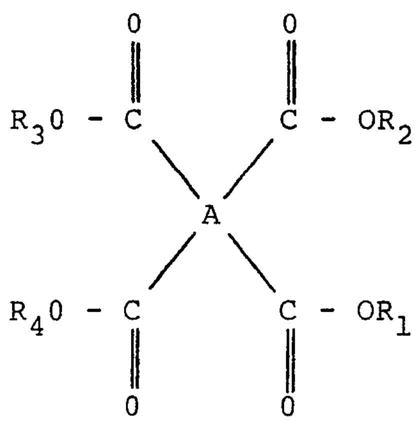

worin A eine vierwertige organische Gruppe darstellt und $R_1$ bis $R_4$ jeweils aus der Gruppe Wasserstoff und $C_1$ bis $C_3$-Alkyl ausgewählt werden.

10. Laminat nach einem der Ansprüche 1 bis 9, worin das aromatische Diamin des Schaums Methylendianilin ist.

11. Laminat nach einem der Ansprüche 1 bis 10, das mindestens ein aromatisches und mindestens ein heterocyclisches Diamin enthält.

12. Laminat nach einem der Ansprüche 1 bis 10, das mindestens ein aliphatisches Diamin enthält.

13. Laminat nach einem der Ansprüche 1 bis 12, worin die Oberfläche des Schaums unter der Einwirkung von Wärme und Druck mit einer erhitzten Oberfläche in Kontakt gebracht wird, wobei Temperatur und Druck so hoch sind, daß die Zellen des Schaums koaleszieren unter Bildung einer flexiblen, nicht-porösen, dampfundurchlässigen Haut.

14. Laminat nach einem der Ansprüche 1 bis 13, worin die Oberfläche auf eine Temperatur im Bereich von 225° bis 320° erhitzt wird.

15. Verfahren zur Herstellung eines Laminats mit einer flexiblen, nicht-porösen Oberfläche, das die folgenden Stufen umfaßt: Erhitzen mindestens einer Oberfläche eines Polyimidschaums im Kontakt mit einer feuerbeständigen Klebeschicht, die durch Wärme aktiviert ist, und eines Polyimidfilms im Kontakt mit der Klebeschicht unter der Einwirkung von Wärme und Druck, wobei Temperatur und Druck so hoch sind, daß die Oberfläche des Schaums schmilzt und die Zellen des Schaums koaleszieren unter Bildung einer flexiblen, nicht- porösen, dampfundurchlässigen Haut, mit der das Polyimid durch ein Klebemittel verbunden wird, wobei der Polyimidschaum aus einem Prepolymer hergestellt wird, das aus (1) einer organischen Tetracarbonsäure oder -anhydrid oder einem Esterderivat, (2) einem aromatischen Diamin der Formel
$H_2N - R_2 - NH_2$,
worin $R_2$ für eine aromatische Gruppe mit 5 bis 16 Kohlenstoffatomen steht, und (3) einem organischen flüssigen Diamin, das mindestens 50 Gew.% eines konjugierten Diens enthält, gebildet wird, wobei der Schaum auf seiner einen Oberfläche eine dampfundurchlässige Haut aufweist, die durch Erhitzen einer Oberfläche des Schaums zum Koaleszieren des Polyimids an der Oberfläche gebildet wurde.

**16.** Verfahren nach Anspruch 15, worin die Oberfläche des Schaums mindestens 0,75 Minuten lang auf eine Temperatur im Bereich von 225° bis 320° C erhitzt wird.

**17.** Verfahren nach einem der Ansprüche 15 oder 16, worin das organische Diamin ein Polymer mit endständigem Amin ist, das zu mindestens 50 Gew.% aus lediglich einem konjugierten Dien besteht oder mit mindestens einem damit copolymerisierbaren Vinylmonomer, das mit einem aliphatischen oder aromatischen Amin am Ende blockiert ist, copolymerisiert wird.

**18.** Verfahren nach einem der Ansprüche 15 bis 17, worin der Schaum in Gegenwart eines festen Treibmittels hergestellt wird.

**19.** Polyimidschaum-Formkörper mit einer flexiblen, hydrophoben, nicht-porösen, dampfundurchlässigen Haut auf seiner einen Oberfläche aus einem Polyimidschaum, der hergestellt wurde durch Verschäumen eines Prepolymers, das aus (a) einer organischen Tetracarbonsäure oder deren Anhydrid oder einem Esterderivat, (b) einem aromatischen Diamin der Formel:
$H_2N - R_2 - NH_2$,
worin $R_2$ für eine aromatische Gruppe mit 5 bis 16 Kohlenstoffatomen steht, und (c) einem organischen flüssigen Diamin, das mindestens 50 Gew.% eines konjugierten Diens enthält, hergestellt wurde, wobei die Haut durch Erhitzen mindestens einer Oberfläche des Schaums zum Koaleszieren des Polyimids an der Oberfläche und zur Bildung der flexiblen, nicht-porösen, dampfundurchlässigen Haut auf der Oberfläche erzeugt wurde.

**20.** Verfahren zur Herstellung eines Polyimidschaums mit einer flexiblen, nicht-porösen Haut auf einer Oberfläche desselben, bei dem mindestens eine Oberfläche eines Polyimidschaums unter der Einwirkung von Wärme und Druck erhitzt wird, wobei Temperatur und Druck so hoch sind, daß die Oberfläche des Schaums schmilzt und die Zellen des Schaums koaleszieren unter Bildung einer flexiblen, nicht-porösen, dampfundurchlässigen Haut, wobei der Polyimidschaum aus (a) einer organischen Tetracarbonsäure oder deren Anhydrid oder einem Esterderivat, (b) einem aromatischen Diamin der Formel:
$H_2N - R_2 - NH_2$,
worin $R_2$ für eine aromatische Gruppe mit 5 bis 16 Kohlenstoffatomen steht, und (c) einem organischen flüssigen Diamin, das mindestens 50 Gew.% eines konjugierten Diens enthält, hergestellt wird, wobei die Haut dadurch erzeugt wird, daß mindestens eine Oberfläche des Schaums so erhitzt wird, daß das Polyimid an der Oberfläche koalesziert unter Bildung einer flexiblen, nicht-porösen, dampfundurchlässigen Haut auf der Oberfläche.

**21.** Verfahren nach Anspruch 20, worin das organische flüssige Diamin aus der Gruppe ausgewählt wird, die besteht aus einem Polymer der Formel:

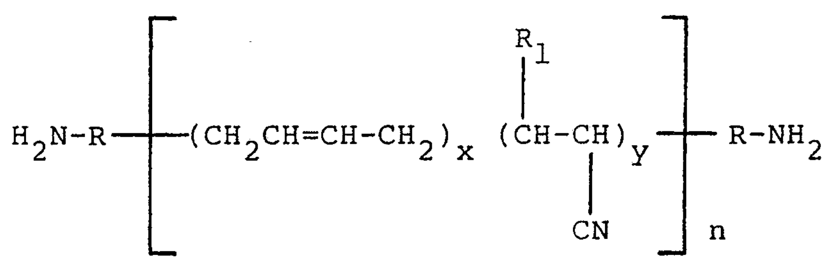

worin R entweder eine Phenylen- oder eine Alkylengruppe, $R_1$ Wasserstoff oder Methyl, x und y jeweils unabhängig voneinander ganze Zahlen im Bereich zwischen 1 und 25 und n eine ganze Zahl, vorzugsweise unter 20, bedeuten.

**22.** Verfahren nach Anspruch 20 oder 21, worin der Schaum in Gegenwart eines festen Treibmittels hergestellt wird.

**23.** Verfahren nach einem der Ansprüche 20 bis 22, worin das aromatische Diamin Diaminopyridin ist.